# EUROPEAN PATENT APPLICATION

(11) **EP 4 079 508 A1**
(43) Date of publication of application: **26.10.2022**
(21) Application number: 22169754.3
(22) Date of filing: 25.04.2022
(51) Int. Cl.: B32B 5/02, B01J 20/26, B01J 20/28, B32B 7/02, B32B 27/12, B32B 27/30, B32B 37/00, C02F 1/40, C09K 3/32

(54) **HYDROCARBON ABSORBENT STRUCTURES**

(30) Priority: 23.04.2021 GB 202105802
(71) Applicant: Capture Green Limited, Colchester, Essex CO7 6QT (GB)
(72) Inventor: Atkin, Ross, Colchester, CO7 6QT (GB); Ali, Savash, Colchester, CO7 6QT (GB)
(74) Representative: Sandersons

(57) **Abstract**

A method of manufacturing a hydrocarbon absorbent structure comprises providing a lower sheet of material (2) and dispensing a hydrocarbon absorbent polymer mixture (4) thereon. The polymer mixture (4) is then preheated so as to at least partially melt the polymer mixture (4). An upper sheet of material (6) is then provided onto the at least partially melted polymer mixture on the lower sheet of material (2). The lower sheet of material (2), polymer mixture (4) and upper sheet of material (6) are then laminated together to form a hydrocarbon absorbent laminate structure (8).

## Description

The present invention relates to a method of manufacturing a hydrocarbon absorbent structure and to an apparatus for manufacturing a hydrocarbon absorbent structure.

Hydrocarbon absorbent structures can be used to contain hydrocarbon-based compounds, e.g. automotive fuels and lubricants, in order to prevent those compounds from contaminating the surrounding environment following a leakage or spillage. Hydrocarbon absorbent structures typically comprise a hydrocarbon absorbent polymer contained between upper and lower sheets of permeable material. Upon contact with a hydrocarbon-based compound, the polymer in the structure solidifies the compound, and thereby retains that compound permanently within the structure. Hydrocarbon absorbent structures tend to be left in situ for long periods of time as a precautionary measure and are often moved from site to site numerous times without coming into contact with hydrocarbon-based compounds. Prior to contact with hydrocarbon-based compounds, the polymer in the structure can begin to migrate through the upper and lower sheets and out of the structure. The upper and lower sheets can also become detached from one another over time. This can severely reduce the ability of the structure to absorb hydrocarbon-based compounds and the loose polymer itself can pollute the surrounding environment with microplastic material.

It is desired to provide improvements relating to the manufacture of hydrocarbon absorbent structures.

Thus, according to an aspect of the present invention there is provided a method of manufacturing a hydrocarbon absorbent structure, the method comprising:
providing a lower sheet of material;
dispensing a hydrocarbon absorbent polymer mixture onto the lower sheet of material;
preheating the polymer mixture on the lower sheet of material so as to at least partially melt the polymer mixture;
providing an upper sheet of material onto the at least partially melted polymer mixture on the lower sheet of material; and
laminating the lower sheet of material, polymer mixture and upper sheet of material together to form a hydrocarbon absorbent laminate structure.

According to another aspect of the present invention there is provided an apparatus for manufacturing a hydrocarbon absorbent structure, the apparatus comprising:
a lower sheet dispenser configured to provide a lower sheet of material;
a polymer mixture dispenser configured to dispense a hydrocarbon absorbent polymer mixture onto the lower sheet of material;
a heater configured to preheat the polymer mixture on the lower sheet of material so as to at least partially melt the polymer mixture;
an upper sheet dispenser configured to provide an upper sheet of material onto the at least partially melted polymer mixture on the lower sheet of material; and
a laminator configured to laminate the lower sheet of material, polymer mixture and upper sheet of material together to form a hydrocarbon absorbent laminate structure.

The Applicants have identified that, by preheating the polymer mixture prior to lamination, embodiments of the present invention can provide a hydrocarbon absorbent structure which exhibits reduced amounts of polymer migration through the upper and lower sheets and which exhibits reduced likelihood of delamination. In particular, the preheating of the polymer mixture, prior to the introduction of the upper sheet (which may be highly thermally insulating), can allow a greater degree of heat transfer into, and thus melting of, the polymer mixture prior to lamination. This in turn helps to adhere the polymer mixture to the sheets and results in a more robust lamination of the sheets. Embodiments of the present invention can also allow for a viable structure to be manufactured that includes a much thicker layer of polymer mixture in comparison to existing structures, and this in turn can greatly increase the absorbent capacity of the structure. Furthermore, by preheating the polymer mixture, embodiments of the present invention can lead to shorter lamination times and thus greater manufacturing throughput. The shorter lamination times can in turn allow for relatively higher laminating temperatures and/or pressures to be used without adversely affecting the sheets. In contrast, in manufacturing processes without preheating, longer lamination times are required to provide sufficient heat transfer through the sheets to the polymer mixture, and the laminating temperatures and/or pressures must be lower in order to prevent damage to those sheets over the longer lamination time.

In embodiments, the lower sheet of material and/or upper sheet of material may comprise a sheet of material which is substantially permeable to hydrocarbon-based compounds. The lower sheet of material and/or upper sheet of material may comprise a non-woven material. The lower sheet of material and/or upper sheet of material may comprise a stitch-bonded material. The lower sheet of material and/or upper sheet of material may be formed of a polymer material, such as polyester and/or viscose.

In embodiments, the lower sheet of material may be provided from a roll of that material. Thus, the lower sheet dispenser may comprise a lower sheet reel configured to provide the lower sheet of material. The lower sheet reel may be indirectly rotated by pulling the lower sheet of material. Alternatively, the lower sheet reel may be directly rotated. For example, the lower sheet reel may be coupled to a motor configured to rotate the lower sheet reel in accordance with a desired dispensing speed for the lower sheet of material. Similarly, in embodiments, the upper sheet of material may be provided from a roll of that material. Thus, the upper sheet dispenser may comprise an upper sheet reel configured to provide the upper sheet of material. The upper sheet reel may be indirectly rotated by pulling the upper sheet of material. Alternatively, the upper sheet reel may be directly rotated. For example, the upper sheet reel may be coupled to a motor configured to rotate the upper sheet reel in accordance with a desired dispensing speed for the upper sheet of material.

In embodiments, the polymer mixture may comprise one or more hydrocarbon absorbent polymers. The polymer mixture may comprise one or more hydrocarbon solidifying polymers. The polymer mixture may also comprise one or more adhesives. The one or more adhesives may comprise one or more elastomeric polymer adhesives. The one or more adhesives may comprise one or more hot melt adhesives. For example, the one or more adhesives may comprise one or more Ethylene-Vinyl Acetate (EVA) adhesives. Other suitable adhesives may include, but are not limited to, one or more Polyamide (PA), CoPolyamide (CoPA), Polyester, Co-Polyester (CoPES), Polyolefin (PO), Polyethylene (PE), Low Density Polyethylene (LDPE), High Density Polyethylene (HDPE), Polypropylene (PP), Polycaprolactone (PCL), Polyurethane (PUR or PU), Thermoplastic Polyurethane (TPU), Polylactide (PLA), Polyvinyl Alcohol (PVA), etc., adhesives. The one or more adhesives may include one or more copolymer, terpolymer, quaterpolymer, etc., adhesives. The one or more adhesives can help to adhere the upper and lower sheets together. The polymer mixture may be provided in granular and/or powder form.

In embodiments, the polymer mixture may be dispensed under gravity. Thus, the polymer mixture dispenser may comprise a hopper. The polymer mixture dispenser may have a dispensing aperture located above the lower sheet of material. The dispensing aperture may be elongate. The dispensing aperture may extend across the majority or substantially all of the width of the lower sheet of material. The dispensing rate of the polymer mixture may be substantially fixed, for example by the size of the dispensing aperture. Alternatively, the polymer mixture dispenser may comprise an adjustable valve arrangement for regulating the dispensing rate of the polymer mixture. The polymer mixture may form a polymer mixture layer having a thickness of at least 2mm, for example of at least 4mm, for example of at least 5mm. The polymer mixture may form a polymer mixture layer having a thickness in the range 2-10mm, for example in the range 4-8mm. These thicknesses are much greater than those of existing structures.

In embodiments, the preheating may comprise heating the polymer mixture to a temperature of at least 50°C, for example of at least 75°C, for example of at least 90°C. The preheating may comprise heating the polymer mixture to a temperature in the range 50°C-150°C, for example in the range 75°C-125°C, for example in the range 90°C-100°C. The heater may comprise an infrared heater. The heater may operate at a temperature in the range 150°C-250°C, for example in the range 175°C-225°C, for example of substantially 200°C. The heater may be located above the lower sheet of material. This can improve heat transfer to the polymer mixture. The heater may be spaced appropriately from the lower sheet of material to preheat the polymer mixture accordingly.

In embodiments, the laminating may comprise applying heat to the lower sheet of material, polymer mixture and upper sheet of material. Thus, the laminator may comprise one or more heaters. The laminating may comprise applying heat at a temperature of at least 50°C, for example of at least 100°C, for example of at least 150°C, for example of at least 170°C. The laminating may comprise applying heat at a temperature in the range 50°C-250°C, for example in the range 100°C-225°C, for example in the range 150°C-200°C, for example in the range 170°C-180°C. The laminating may comprise applying pressure to the lower sheet of material, polymer mixture and upper sheet of material. Thus, the laminator may comprise one or more pressure actuators. The laminating may comprise applying a pressure of at least 120kPa (1.2 bar), for example of at least 150kPa (1.5 bar), for example of at least 200kPa (2 bar), for example of at least 250kPa (2.5 bar). The laminating may comprise applying a pressure in the range 120kPa-500kPa (1.2-5 bar), for example in the range 150kPa-500kPa (1.5-5 bar), for example in the range 200kPa-400kPa (2-4 bar), for example in the range 250kPa-350kPa (2.5-3.5 bar). These embodiments can allow relatively shorter lamination times when compared with embodiments having lower temperatures and/or pressures. The laminating may take place over a period of time in the range 10-40 seconds, for example in the range 15-35 seconds, for example in the range 20-30 seconds.

In embodiments, the laminating may be performed using a flatbed laminator, calendaring equipment, or any other suitable laminator. The laminator may comprise one or more conveyers (e.g. belts and/or rollers) for conveying the laminate structure through the laminator. For example, the laminator may comprise a first (lower) conveyer and a second (upper) conveyer for conveying the laminate structure through the laminator. The laminate structure may pass between the first and second conveyers. The heat and/or pressure may be provided via one or more of the conveyers. The one or more conveyers may be directly rotated. For example, the one or more conveyers may be coupled to a motor configured to rotate the one or more conveyers in accordance with a desired speed for conveying the laminate structure. Alternatively, the one or more conveyers may be indirectly rotated by pulling the laminate structure through the lam inator.

In embodiments, the laminate structure may be received for subsequent processing. Thus, the apparatus may comprise a laminate structure receiver for receiving the laminate structure. The laminate structure may be received onto a roll of that structure. Thus, the laminate structure receiver may comprise a laminate structure reel configured to receive the laminate structure. The laminate structure reel may be directly rotated. For example, the laminate structure reel may be couple to a motor configured to rotate the laminate structure reel in accordance with a desired receiving speed for the laminate structure.

In embodiments, the dispensing speed of the lower sheet dispenser may be controlled to regulate the thickness of polymer mixture deposited onto the lower sheet during the depositing and/or to regulate the amount of heat transferred to the polymer mixture during the preheating. Alternatively or additionally, the dispensing rate of the polymer mixture may be controlled (e.g. with a valve) to regulate the thickness of polymer mixture deposited onto the lower sheet of material during the depositing. The dispensing speed of the lower sheet dispenser may be controlled by directly controlling the speed of the lower sheet dispenser itself, the speed of the one or more conveyers, and/or the speed of the laminate receiver. Similarly, the dispensing speed of the upper sheet dispenser may be controlled by directly controlling the speed of the upper sheet dispenser itself, the speed of the one or more conveyers, and/or the speed of the laminate receiver.

In embodiments, the apparatus may comprise one or more control units for controlling the operation of the apparatus, for example in accordance with the method. The one or more control units may control one or more of the temperatures, pressures, speeds and/or rates disclosed herein. The apparatus may comprise a central controller for controlling the one or more control units.

In embodiments, the subsequent processing of the laminate structure may comprise forming a layered structure using the laminate structure. Forming the layered structure may comprise cutting the laminate structure to size. Forming the layered structure may comprise assembling the laminate structure together with one or more other functional layers.

In embodiments, the one or more other functional layers may comprise one or more layers of wicking material configured to draw in and/or hold hydrocarbon-based compounds adjacent to the laminate structure. In this regard, it has been identified that some hydrocarbon absorbent polymers can be relatively slow to react with hydrocarbon-based compounds, particularly in cold environments, and these embodiments can help to prevent significant run-off and/or pooling of the hydrocarbon-based compounds by drawing those compounds into the wicking layer prior to reaction with the hydrocarbon absorbent polymer. The one or more layers of wicking material may be placed above the laminate structure and/or below the laminate structure. The one or more layers of wicking material may comprise a sheet of wicking material. The wicking material may comprise a non-woven material. The wicking material may comprise a needle-punched material. The wicking material may comprise a polymer material, such as polypropylene.

In embodiments, the one or more other functional layers may comprise one or more layers of outer material configured to protect (e.g. encase) the laminate structure and, if present, any other functional layers. One or more layers of outer material may be placed above the laminate structure and/or below the laminate structure and, if present, any other functional layers. The one or more layers of outer material may comprise a first outer layer and/or a second outer layer. The first (e.g. upper) outer layer may be placed above the laminate structure and, if present, any other functional layers and/or the second (e.g. lower) outer layer may be placed below the laminate structure and, if present, any other functional layers. The first outer layer and second outer layer may be joined to one another about the majority or all of the periphery of those layers, e.g. by stitching or welding. The one or more layers of outer material may each comprise a sheet of outer material. The outer material may comprise a non-woven material. The outer material may comprise a polymer material, such as polyester, polyethylene, polyvinylchloride (PVC), etc.. One or more of the layers of outer material (e.g. the upper and/or lower outer layer in use) may be substantially permeable to hydrocarbon-based compounds. For example, one or more of the layers of outer material may be perforated. This can allow hydrocarbon-based compounds to come into contact with the laminate structure and/or allow water to pass through the product. Conversely, one or more of the layers of outer material (e.g. the lower outer layer in use) may be substantially impermeable to hydrocarbon-based compounds. This can help to prevent hydrocarbon-based compounds from passing straight through the product.

In embodiments, the laminate structure and/or layered structure may be incorporated into a hydrocarbon absorbent product. In some embodiments, the product may comprise a substantially planar pad product comprising the laminate structure and/or layered structure. The product may be configured to be placed on a substantially level surface, such as the ground or a floor, in use. Machinery and/or containers having hydrocarbon-based compounds therein or thereon, which may leak or spill, may be placed on the pad product. The pad product may accordingly help to contain any leaks or spills from the machinery and/or containers. In other embodiments, the product may comprise a drain filter product comprising a substantially hollow (e.g. cylindrical or conical) section comprising the laminate structure and/or layered structure. The hollow section may have an open end configured to receive liquids in use. The hollow section may have a closed end configured to be placed in a drain in use. The drain filter product may comprise a substantially planar section surrounding the open end configured to be placed on a substantially level surface, such as the ground or a floor, surrounding a drain in use. The planar section may be substantially impermeable to hydrocarbon-based compounds and/or water. Liquids may flow into the drain filter product, for example across the planar section and/or into the hollow section in use. Water may flow through the drain filter product in use. The drain filter product may accordingly help to prevent hydrocarbon-based compounds in waste liquids from entering a drain whilst still allowing water to soak into the drain.

As will be appreciated, the expression "hydrocarbon absorbent" used herein may refer to the ability to react with and solidify hydrocarbon-based compounds, and the expression "hydrocarbon-based compound" used herein refers generally both to pure hydrocarbons and to other hydrocarbon-based compounds, such as automotive fuels and lubricants, which may be substantially liquid at standard temperature and pressure (0°C and 100kPa).

As will also be appreciated, the expressions "lower" and "upper" used herein are generally with reference to the structure during manufacture, although the structure may in fact be used in other orientations.

By way of example only, embodiments of the invention will now be described in detail with reference being made to the accompanying drawings in which:
**Figure 1** is a schematic illustration of an apparatus for manufacturing a hydrocarbon absorbent structure according to an embodiment of the present invention;
**Figure 2** is a partial cross-section through a hydrocarbon absorbent structure according to an embodiment of the present invention;
**Figure 3A** is a plan view of a product incorporating the hydrocarbon absorbent structure of Figure 2;
**Figure 3B** is a side view of the product of Figure 3A;
**Figure 4A** is a plan view of another product incorporating the hydrocarbon absorbent structure of Figure 2; and
**Figure 4B** is a side view of the product of Figure 4A.

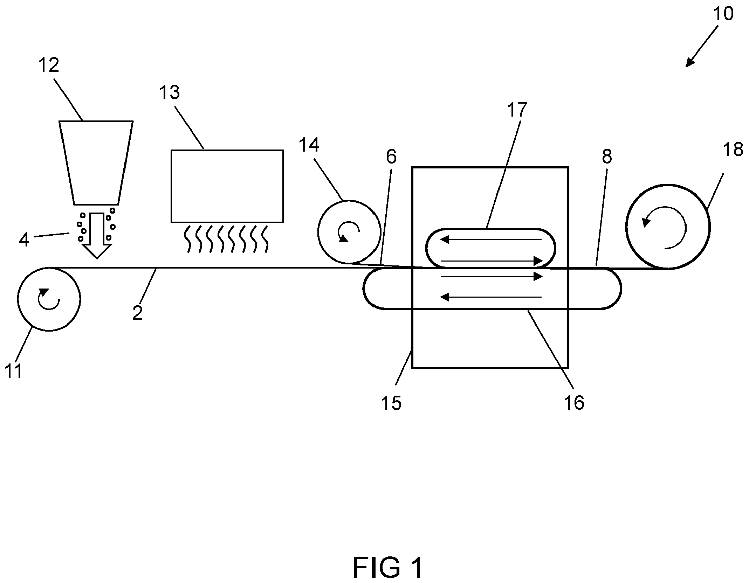

Figure 1 shows an apparatus 10 for manufacturing a hydrocarbon absorbent structure. The apparatus 10 comprises a lower sheet dispenser reel 11 which provides a lower sheet of material 2. In this embodiment, the lower sheet of material 2 comprises a permeable non-woven stitch-bonded material formed of polyester or viscose. The apparatus 10 further comprises a polymer mixture dispenser hopper 12 having an elongate opening which dispenses a hydrocarbon absorbent polymer mixture 4 under gravity onto, and across the width of, the lower sheet of material 2. The dispensing rate is fixed by the size of the opening of the hopper 12. In this embodiment, the polymer mixture 4 comprises a mixture of hydrocarbon absorbent polymers and EVA adhesive. The apparatus 10 further comprises an infrared heater 13 that preheats the polymer mixture 4 on the lower sheet of material 2 so as to at least partially melt the polymer mixture 4. In this embodiment, the heater 13 operates at around 200°C, but is spaced from the lower sheet of material 2 so as to heat the polymer mixture 4 to around 90°C - 100°C. The apparatus 10 further comprises an upper sheet dispenser reel 14 which provides an upper sheet of material 6 onto the at least partially melted polymer mixture 4 on the lower sheet of material 2. In this embodiment, the upper sheet of material 6 also comprises a permeable non-woven stitch-bonded material formed of polyester or viscose. The apparatus 10 further comprises a laminator 15 which laminates the lower sheet of material 2, polymer mixture 4 and upper sheet of material 6 together to form a hydrocarbon absorbent laminate structure 8. The laminator 15 comprises a first (lower) conveyer 16 and second (upper) conveyer 17 which convey the laminate structure 8 through the laminator 15, with the laminate structure 8 passing between the conveyers. In this embodiment, the laminate structure 8 takes around 25 seconds to pass through the laminator 15. In this embodiment, the laminator 15 operates at around 175°C and 300kPa (3 bar). The apparatus 10 further comprises a laminate structure receiver reel 18 which receives the laminate structure 8. In this embodiment, the receiver reel 18, first conveyer 16 and second conveyer 17 are directly rotated by motors, with the lower sheet dispenser reel 11 and upper sheet dispenser reel 14 being indirectly rotated. The motors operate at an appropriate speed to regulate the thickness of polymer mixture 4 deposited onto the lower sheet of material 2 and to regulate the amount of heat transferred to the polymer mixture 4 from the heater 13. In this embodiment, the thickness of the layer of polymer mixture 4 is around 5mm.

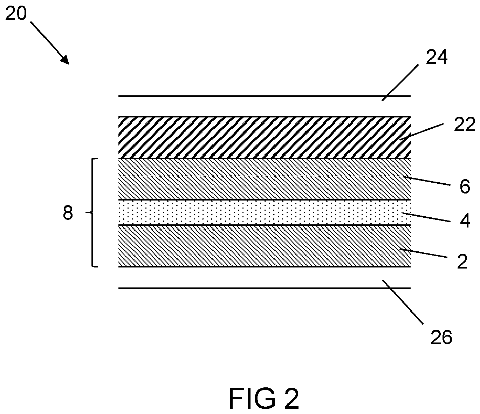

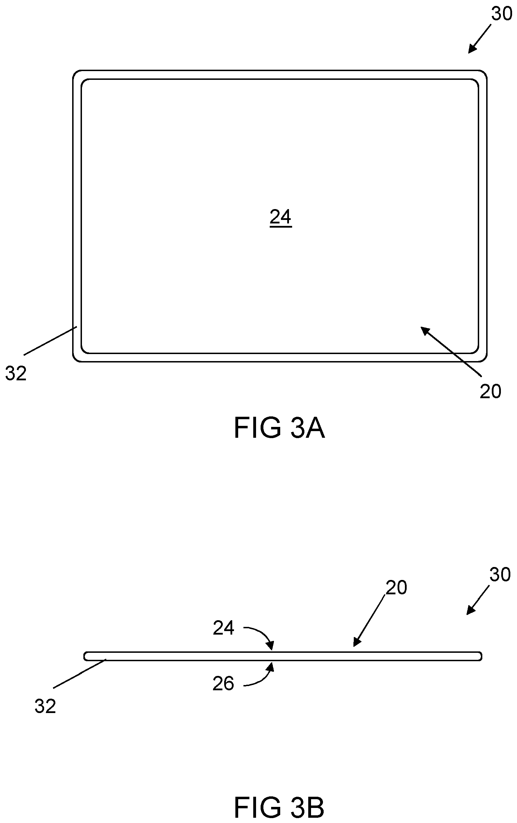

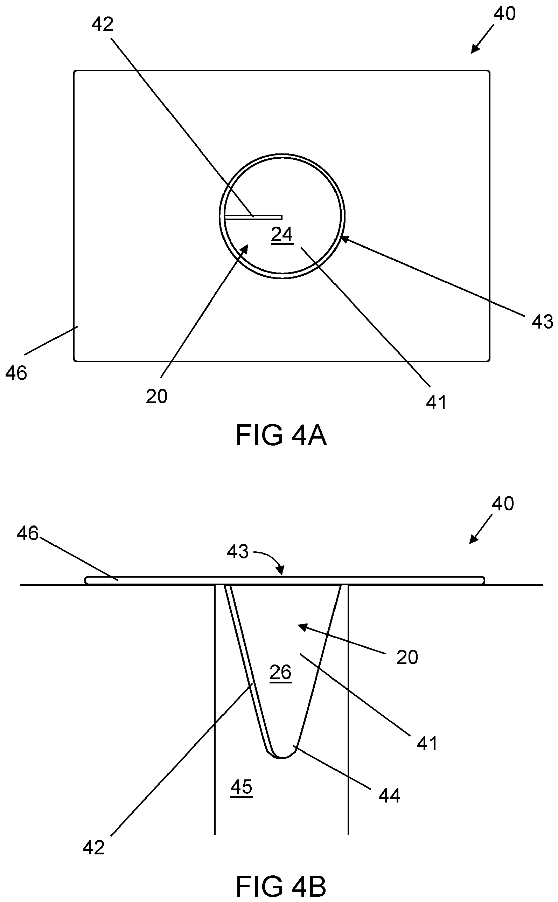

The laminate structure 8 can then be cut to size and assembled together with other functional layers to form a layered hydrocarbon absorbent structure. Figure 2 shows (not to scale) a partial cross-section through a layered hydrocarbon absorbent structure 20, which comprises the lower sheet of material 2, polymer mixture 4, and upper sheet of material 6 of the laminate structure 8. The structure 20 further comprises a wicking layer 22 that draws in and holds hydrocarbon-based compounds adjacent to the laminate structure 8. In this embodiment, the wicking layer 22 is formed of a non-woven needle-punched sheet of polypropylene. A second wicking layer may also be provided under the laminate structure 8 if desired. The structure 20 further comprises a first outer layer 24. In this embodiment, the first outer layer 24 is formed of a perforated sheet of PVC that allows hydrocarbon-based compounds to enter the structure 20 from above in use. The structure 20 further comprises a second outer layer 26. In some embodiments (e.g. that of Figure 3), the second outer layer 26 is formed of an impermeable sheet of polyethylene coated polyester that prevents hydrocarbon-based compounds from passing straight through the structure 20. However, in other embodiments (e.g. that of Figure 4), the second outer layer 26 is formed of a perforated sheet of PVC that allows water to pass through the structure 20, with hydrocarbon-based compounds having been filtered out.

Figures 3A and 3B show a hydrocarbon absorbent product 30 which incorporates the structure 20. In this embodiment, the product 30 comprises a planar pad product in which the first (upper) outer layer 24 is joined to the second (lower) outer layer 26 about the periphery by overstitching 32. The product 30 can be placed on the ground or a floor under machinery and/or containers which are prone to leaking or spilling hydrocarbon-based compounds.

Figures 4A and 4B show another hydrocarbon absorbent product 40 which incorporates the structure 20. In this embodiment, the product 40 has a substantially hollow conical section 41 comprising the structure 20 joined to itself at a stitched seem 42. The hollow conical section 41 has an open end 43 configured to receive waste liquids and a closed end 44 which is placed in a drain 45. The product 40 also comprises an impermeable planar section 46 surrounding the open end 43 which is placed on the ground or a floor surrounding the drain 45. Waste liquids can flow across the planar section 46 and into the hollow section 41, with the hollow section 41 preventing hydrocarbon-based compounds in the liquids from entering the drain 45 whilst still allowing water to soak into the drain 45.

## Claims

1. A method of manufacturing a hydrocarbon absorbent structure, the method comprising:
providing a lower sheet of material (2);
dispensing a hydrocarbon absorbent polymer mixture (4) onto the lower sheet of material (2);
preheating the polymer mixture (4) on the lower sheet of material (2) so as to at least partially melt the polymer mixture (4);
providing an upper sheet of material (6) onto the at least partially melted polymer mixture (4) on the lower sheet of material (2); and
laminating the lower sheet of material (2), polymer mixture (4) and upper sheet of material (6) together to form a hydrocarbon absorbent laminate structure (8).

2. A method as claimed in claim 1, wherein the lower sheet of material (2) and/or the upper sheet of material (6) is substantially permeable to hydrocarbon-based compounds.

3. A method as claimed in claim 1 or 2, wherein the polymer mixture (4) comprises one or more hydrocarbon absorbent polymers and/or one or more hydrocarbon solidifying polymers.

4. A method as claimed in claim 1, 2 or 3, wherein the polymer mixture (4) comprises one or more adhesives.

5. A method as claimed in claim 4, wherein the one or more adhesives comprise one or more elastomeric polymer adhesives and/or one or more hot melt adhesives.

6. A method as claimed in any one of the preceding claims, wherein the polymer mixture (4) is dispensed under gravity.

7. A method as claimed in any one of the preceding claims, wherein the preheating comprises heating the polymer mixture (4) to a temperature of at least 50°C.

8. A method as claimed in any one of the preceding claims, wherein the laminating comprises applying heat at a temperature of at least 50°C and/or applying a pressure of at least 120kPa (1.2 bar).

9. A method as claimed in any one of the preceding claims, further comprising conveying the laminate structure (8) through the laminator (15) with one or more conveyors (16, 17).

10. A method as claimed in claim 9, wherein heat and/or pressure is provided via one or more of the conveyers (16, 17).

11. A method as claimed in any one of the preceding claims, wherein the dispensing speed of a lower sheet dispenser (11) is controlled to regulate the thickness of polymer mixture (4) deposited onto the lower sheet of material (2) and/or to regulate the amount of heat transferred to the polymer mixture (4) during the preheating.

12. A method as claimed in any one of the preceding claims, further comprising forming a layered structure (20) using the laminate structure (8).

13. A method as claimed in claim 12, wherein forming the layered structure (20) comprises assembling the laminate structure (8) together with one or more layers of wicking material (22) configured to draw in hydrocarbon-based compounds and/or hold hydrocarbon-based compounds adjacent to the laminate structure (8).

14. A method as claimed in claim 12 or 13, wherein forming the layered structure (20) comprises assembling the laminate structure (8) together with one or more layers of outer material (24, 26) configured to protect the laminate structure (8).

15. An apparatus (10) for manufacturing a hydrocarbon absorbent structure, the apparatus comprising:
a lower sheet dispenser (11) configured to provide a lower sheet of material (2);
a polymer mixture dispenser (12) configured to dispense a hydrocarbon absorbent polymer mixture (4) onto the lower sheet of material (2);
a heater (13) configured to preheat the polymer mixture (4) on the lower sheet of material (2) so as to at least partially melt the polymer mixture (4);
an upper sheet dispenser (14) configured to provide an upper sheet of material (6) onto the at least partially melted polymer mixture (4) on the lower sheet of material (2); and
a laminator (15) configured to laminate the lower sheet of material (2), polymer mixture (4) and upper sheet of material (6) together to form a hydrocarbon absorbent laminate structure (8).
